Europäisches Patentamt

European Patent Office

Office européen des brevets

(19)

(11) Publication number: **0 220 155 B1**

(12) **EUROPEAN PATENT SPECIFICATION**

(45) Date of publication of patent specification: **18.12.91**  (51) Int. Cl.⁵: **C08L 77/00, C08L 51/04**

(21) Application number: **86870117.8**

(22) Date of filing: **20.08.86**

(54) **Rubber-modified nylon composition.**

(30) Priority: **21.08.85 US 767944**
**09.07.86 US 881014**

(43) Date of publication of application:
**29.04.87 Bulletin 87/18**

(45) Publication of the grant of the patent:
**18.12.91 Bulletin 91/51**

(84) Designated Contracting States:
**BE DE FR GB IT NL SE**

(56) References cited:
**EP-A- 0 202 214**
**DE-A- 3 120 803**

(73) Proprietor: **Monsanto Company**
**Patent Department 800 North Lindbergh Boulevard**
**St. Louis Missouri 63167-7020(US)**

(72) Inventor: **Lavengood, Richard Eugene**
**134 Wenonah Road**
**Longmeadow Massachusetts 01106(US)**
Inventor: **Patel, Raman**
**578 Sun Valley Drive**
**Akron Ohio 44313(US)**
Inventor: **Padwa, Allen Robert**
**6 Congress Street**
**Worcester Massachusetts 01609(US)**

(74) Representative: **Ernst, Hubert et al**
**Monsanto Services International S.A. Avenue de Tervuren 270/272**
**B-1150 Brussels(BE)**

## Description

This invention relates to thermoplastic polyamide polyblends and more particularly to impact resistant polyamide polyblends.

Unmodified thermoplastic polyamides are generally regarded as having good elongation and good energy to break as demonstrated in tensile tests and high tensile impact strength and high energy absorption as demonstrated in a falling dart test, e.g, the Gardner impact test. However, the polyamides are quite deficient in resistance to crack propagation. This deficiency is reflected in notch sensitivity, brittle breaks and occasional catastrophic failure of molded extruded parts. The tendency of polyamides to break in a brittle rather than a ductile fashion is a significant limitation of their end use applications.

A variety of additives have been added to polyamides with some improvement in toughness being obtained. Epstein (U.S.P. 4,174,358) discloses a toughened multiphase thermoplastic composition consisting essentially of a polyamide matrix and at least one other phase containing straight-chain and branched-chain polymers having a particle size in the range of 0.01 to 1.0 micrometers, which adhere to the polyamide matrix resin and which also have tensile modulus in the range of about 1.0 to 20,000 psi (0.0069 to 137.8 MPa).

German Patent Publication DE3120803 discloses thermoplastic polyamide molding compositions comprising a polyamide, a graft rubber composition, styrene-acrylonitrile copolymer and a styrene copolymer with 2 to 50 weight percent of carboxylic acid and/or anhydride groups. Such compositions provide some increase in Izod impact of a nylon composition, however, the improvements are less than can be achieved with the present invention.

Baer (U.S.P. 4,306,040) teaches a multiphase core//shell polymer comprising a crosslinked elastomer core and a rigid thermoplastic polymer shell comprising a monoalkyl maleate or fumarate, styrene and acrylonitrile useful for blending with polyamides to provide toughened polyamide compositions. Unlike the present invention in which the ABS is merely blended with an acid-functionalized polymer, Baer's core//shell polymer requires that the rigid thermoplastic polymer shell around the elastomer core be functionalized with acid monomer and grafted to the core. Furthermore, Baer fails to recognize the improvement in impact resistance of nylon blend compositions when acid-containing acrylate copolymers are added to the blend.

It is disclosed in EP-A-0202214 (not published at the priority date of this application) that polyblends can be prepared from polyamides and graft copolymers such as ABS graft copolymer using a hard copolymer containing a rather low concentration of functionalized monomer as a compatibilizer to provide toughened polyamide compositions. It has now been discovered that polyblends of enhanced toughness can be obtained from polyamides and graft polymers such as ABS graft copolymer using a compatibilizing system comprising a soft rubbery acid-functionalized copolymer and a hard acid-functionalized copolymer.

The present invention provides a polymeric composition or polyblend and molded or extruded parts prepared from the polyblend composition, wherein the polyblend comprises:

(A) a graft polymer component comprising from 5 to 80 weight percent of a substrate rubber having a glass transition temperature below $0°C$ and from 95 to 20 weight percent of monomers comprising per 100 parts by weight of monomers from 20 to 75 parts by weight of a vinyl aromatic monomer and from 80 to 25 parts by weight of a monomer selected from the group consisting of $C_1$ to $C_4$ alkyl (meth)-acrylate *and (meth)-acrylonitrile * , said monomers having been polymerized in the presence of and grafted on to the substrate rubber;

(B) a polyamide;

(C) an acid-containing acrylate copolymer rubber having a glass transition temperature below $0°C$; and

(D) an effective amount of an acid-containing polymer to improve the impact resistance of the polymer blend comprising components (A), (B) and (C), said acid-containing polymer having a glass transition temperature above $0°C$ and containing from about 0.1 to about 50 mole percent of acid functional comonomer units;

wherein the weight ratio of component (A) to component (B) is in the range of about 1:9 to about 9:1, wherein the sum of components (A) and (B) is at least about 60 weight percent of the polymer blend and wherein the amount of component (C) is in the range of 1 to 18 weight percent of the polymer blend.

Component (A) is typically an ABS or MBS type polymer, that is to say a diene rubber substrate grafted with a vinylaromatic monomer and either (meth)-acrylonitrile or a $C_1$ to $C_4$ alky (meth)-acrylate, or a mixture of these monomers. Preferred monomers are acrylonitrile and methyl methacrylate. The rubber component is conventionally a diene rubber or hydrogenated diene rubber such as polybutadiene, hydrogenated

*"(meth) -acrylate" means "acrylate or methacrylate", and "(meth) -acrylonitrile" means "acrylonitrile or methacrylonitrile".

polybutadiene, a polymer of butadiene with a comonomer such as styrene or acrylonitrile which rubber contains at least 50 percent and preferably 80 percent by weight of butadiene or a butadiene-based block or radial-block polymer. However the rubber need not be the conventional polybutadiene or butadiene/styrene copolymer since any rubber with a glass transition temperature below $0°C$ such as EPDM rubber, polypentenamer, polyisoprene, polychloroprene, and polyacrylate rubbers can be used. The glass transition temperature is conveniently measured by differential thermal analysis by heating a rubber sample under nitrogen at a rate of $10°C$ per minute. Preferably if the rubber is a polyacrylate, it contains a minor amount, up to 5 weight percent of an interpolymerized monomer such as allyl acrylate to provide unsaturation and enhance grafting thereto.

Vinylaromatic monomers used for the graft copolymer of component A include styrene, and substituted styrenes such as alpha-methyl styrene chlorostyrene, bromostyrene, p-methyl styrene, and vinyl toluene. The weight ratio of vinylaromatic monomer to comonomer in the graft copolymer of component A is preferably in the range of 75:25 to 20:80 and the weight percent of the rubber is in the range of 5 to 80 percent of the total weight of the graft rubber composition and more preferably 5 to 60 percent. A more preferred weight ratio, for example of styrene to acrylonitrile, is in the range of 75:25 to 50:50. The ratio of comonomers of the graft copolymer is preferably selected so that the ungrafted copolymer fraction has a tensile modulus of at least 25,000 psi (417 MPa), more preferably in the range of about 150,000 to 250,000 psi (1,034 to 1,723 MPa). A particularly preferred Component A comprises 5 to 60 weight percent of substitute rubber and 95 to 40 weight percent of graft monomers comprising methyl (meth)acrylate or (meth)acrylonitrile. Advantageously graft polymerization conditions are selected to provide a graft copolymer fraction, i.e., graft efficiency of at least 20 weight percent and preferably at least 40 weight percent of the total copolymer present in the graft rubber composition, and provided the grafted copolymer fraction is maintained above 20 weight percent, the graft rubber composition may be diluted by addition of separately prepared copolymer of vinyl aromatic monomer and comonomer selected from the group consisting of acrylonitrile, methacrylonitrile, $C_1$ to $C_4$ alkyl acrylates and $C_1$ to $C_4$ alkyl methacrylates. Graft polymerization conditions are advantageously selected to provide a copolymer of weight average molecular weight less than 200,000 and preferably less than 150,000 measured on the ungrafted fraction by gel permeation chromatography as hereinafter described. The particle size of the rubber graft composition is advantageously in the range of 0.05 to 1.0 microns, preferably in the range of 0.1 to 0.5 microns, measured as a weight average particle size diameter by centrifugal photosedimentometer.

Component (B) is a polyamide such as nylon 6 or poly(caprolactam), nylon 11 or poly(11-aminoundecanoic acid), nylon 12 or poly(lauryl lactam) or poly(12-aminododecanoic acid), nylon 6,6 or poly-(hexamethylene adipamide), nylon 6,9 or poly(hexamethylene azelamide) or poly(hexamethylene nonandiamide), nylon 6,10 or poly(hexamethylene sebacamide) or poly(hexamethylene decanediamide), nylon 6,12 or poly(hexamethylene dodecanoamide), nylon 4 or poly($\omega$-butyrolactam), nylon 7 or poly(7-aminoheptanoic acid) or poly(7-aminoenanthylic acid), nylon 8 or poly(8-aminocaprylic acid) or poly(8-aminooctanoic acid), nylon 10,6 or poly(decamethylene adipamide) and numerous partially aromatic nylons (PARNs). PARNs result when an aromatic residue or unit is substituted in whole or in part for an aliphatic residue or unit in an aliphatic nylon polymer. For example, substitution of all of the adipic acid [HOOC-$(CH_2)_4$-COOH] residues in nylon 6,6 by those from mixtures of about 30-60 percent terephthalic acid (TA, or p-HOOC-$C_6H_4$-COOH)/70-40 percent isophthalic acid (IA, or m-HOOC-$C_6H_4$-COOH) gives suitable PARNs which are high-melting, partly crystalline nylons 6,TA-co-6,IA or poly(hexamethylene tere-co-isophthalamides). Other suitable PARNs are partly crystalline nylons 6,6-co-6,-TA, nylons 6,6-co-6,IA, nylons 6,6-co-6,-TA-co-6,IA, and other similar PARNs, including partly crystalline PARNs wherein some of the diamine residues have aromatic character and those containing lactam residues, such as nylons 6-co-6,6-co-6,TA.

Also suitable are various types of copolyamides, block copolymers, and graft copolymers. The preferred polyamide resin is selected from the group consisting of nylon 6, nylon 6,6, nylon 6,9 and a random copolymer of nylon 6,6 and nylon 6.

The molecular weight of the polyamide is advantageously selected in the range of 5000 to 35,000 number average, preferably 8000 to 20,000 to provide polyamide compositions which can be readily molded by injection or extrusion techniques.

Polyamides are generally neither miscible nor compatible with hydrocarbon polymers such as polystyrene and ABS. In the generally accepted sense, two polymers are miscible when they form a single phase, solid solution. Miscibility of a blend of polymers may be confirmed by a single Tg for the polyblend, measured by calorimetry or dynamic mechanical analysis, or by optical clarity of the polyblend. When two polymers exhibit different Tgs or loss tangent peaks, they demonstrate immiscibility by forming two phases in a blend, each of which retains the Tg or loss tangent peak of one of the pure components. Partially miscible blends exhibit shifted or broadened loss tangent peaks relative to the individual pure components.

When two polymers are compatible, a mixture provides a stable blend possessing a useful balance of mechanical properties exhibited especially by impact strength or tensile elongation to fail equal or superior to such properties for the component which provides the continuous phase in the mixture. By contrast, when two polymers are incompatible, the mixture exhibits generally poor mechanical properties, especially impact strength or tensile elongation to fail, which are lower than for the component which provides the continuous phase in the mixture. Incompatibility may be manifested during processing, for example, molding and extrusion, by extensive phase separation resulting in layering of the polymers and delamination under mild stress.

The present invention yields blends of polyamides and graft polymer of the ABS type that form compatible mixtures, i.e., stable mixtures comprising a micro dispersion of a minor amount of one polymer in a continuous phase of a major amount of the other and results in polymer blends of generally improved balance of mechanical properties especially toughness demonstrated by higher impact strength and elongation to fail. When about equal amounts of polyamide and ABS are blended, uniformly interspersed coextensive phases are formed in the mixture which also possesses generally improved, mechanical properties. To a limited extent compatible blends of polyamides and grafted rubbers, such as ABS, are obtained by the use of an acid-modified acrylate copolymer rubber (Component C).

Component (C) is typically an acid-containing acrylate copolymer rubber wherein the acid group is capable of reaction with the polyamide through its terminal amine groups, and has a glass transition temperature (Tg) below $0\degree$C. Suitable acid-containing acrylic copolymer rubbers comprise rubbery ethylenically unsaturated carboxylic acid-acrylic ester copolymers. The rubbers of the invention contain about 0.5 to 25 mole percent of an interpolymerized acid-containing monomer such as acrylic or methacrylic acid or $C_1$ to $C_{12}$ monoalkyl esters of diacids such as monomethyl maleate and mono-dodecyl fumarate, a dicarboxylic acid such as fumaric acid, maleic acid, itaconic acid, aconitic acid or citraconic acid, an anhydride, such as maleic, itaconic, aconitic or citraconic anhydride. They are distinguished by their acid functionality from polyacrylate rubbers which generally are essentially non-functionalized acrylic ester polymers. Suitable rubbers include acrylic acid-acrylic ester-alpha-olefin terpolymers which are essentially non-crystalline and have glass transition temperatures (Tg) below $0\degree$C. The rubber may be prepared by partial hydrolysis of an acrylate-olefin copolymer rubber to obtain the required acid groups. Suitable copolymer rubbers are preferably prepared by polymerization of a $C_1$ to $C_{10}$ alkyl acrylate, an alpha-olefin of 2-8 carbon atoms and an acid monomer selected from the group consisting of acrylic acid, methacrylic acid and $C_1$ to $C_4$ monoalkyl ester of maleic and fumaric acids. Preferably Component (C) comprises a copolymer of an alpha-olefin, a $C_1$ to $C_4$ alkyl acrylate and an acid monomer. Preferred rubbers are polymers of ethylene, $C_1$-$C_4$ alkyl acrylate and monoethyl maleate or acrylic acid. More preferred acid functional rubbers are polymers comprising at least 50 mole percent of ethylene, about 10 to 49.5 mole percent $C_1$ to $C_4$ alkyl acrylate, and about 0.5 to 10 mole percent monoethyl maleate or acrylic acid and contribute to significantly enhanced impact properties in the polyblends.

The acrylate copolymer rubber is effective to improve impact resistance in the blend in the range of about 1 to about 18 weight percent. The preferred amount of acrylate copolymer rubber in the blend is from 5 to 15 weight percent, and the most preferred amount is 5 to 10 weight percent acrylate copolymer rubber to provide enhanced impact properties.

Although only a limited degree of toughening is obtained when the acid-containing acrylate copolymer rubber is added to the blend of graft copolymer of the ABS type, a further addition of an acid functional hard copolymer (component (D)) is found to significantly enhance the impact strength of the polyblend. Thus component (D) acts together with component (C) to provide an efficient compatibilizing system for blends of polyamide (component (B)) and graft copolymers of the ABS type (component (A)).

In the present invention, the structure of the D component compatibilizer is such that it meets several criteria:

1. the compatibilizer is at least partially miscible and preferably fully miscible with the graft copolymer of the grafted rubber component A;

2. the compatibilizer contains acid functional groups capable of reacting with the amine end groups of the polyamide. The amount of functional acid groups provided by component (D) is rather small.

Component (D) is typically a copolymer of a vinylaromatic monomer of the type in component (A) copolymerized with an acid functional monomer and optionally a monomer selected from the group consisting of acrylonitrile, methacrylonitrile, a $C_1$ to $C_4$ alkyl methacrylate, a $C_1$ to $C_4$ alkyl acrylate in a weight ratio of vinylaromatic monomer to comonomers in the range of 85:15 to 15:85. Preferred optional monomers are (meth)-acrylonitrile and methyl (meth)-acrylate. Advantageously component (D) has a number average molecular weight of at least about 10,000 and preferably at least about 21,000 and a weight average molecular weight of at least about 20,000 and preferably at least about 40,000. The molecular weights are conveniently measured by gel permeation chromatography as described hereinafter. While in principle the molecular weight can be extremely high, it is advantageous to have a weight average less than 200,000 to provide ease of processing and blending with the other components of the polyblend and preferably less than 100,000. Component (D) contains from about 0.05 to about 50.0 mole percent of a copolymerised comonomer containing an acid group capable of reacting with the amine of the polyamide. Preferably the acid monomer concentration is in the range of 0.1 to 30 mole percent of component (D). The acid group is provided by a monomer such as acrylic or methacrylic acid or $C_1$ to $C_{12}$ monoalkyl esters of diacids such as monomethyl maleate and mono-dodecyl fumarate, a dicarboxylic acid such as fumaric acid, maleic acid, itaconic acid, aconitic acid or citraconic acid, or an anhydride, such as maleic, itaconic, aconitic or citraconic anhydride.

The effective amount of component (D) in the blend is from about 0.006 weight percent to about 39 weight percent. Advantageously, the amount of component (D) lies in the range of 0.01 to 20 weight percent of the polyblend. The actual amount of component (D) effective to improve the impact strength of the blend depends on the concentration of the acid functional groups in the blend. The higher the concentration of acid functional groups, the lower is the effective amount of component (D) in the blend. An excessive amount of component (D) or an excessive amount of acid functional group of component (D) may be detrimental to the impact strength of the blend. An effective amount of acid functional monomer units of component (D) in the blend lies in the range of about 0.00003 to about 0.005 mole per 100 parts by weight of polyblend.

Sufficient miscibility of component (D) with the graft copolymer fraction of the graft rubber composition of component (A) to provide effective compatibilizer activity is generally obtained when the sum of the weight percent ($W_1$) of acid monomer and the weight percent ($W_2$) of the polar monomers, viz. acrylonitrile, methacrylonitrile and $C_1$ to $C_4$ alkyl (meth)-acrylate of component (D) is at least 15 weight percent of component (D) and is equal to the weight percent ($W_3$) of the polar monomers, viz. acrylonitrile, methacrylonitrile and $C_1$ to $C_4$ alkyl (meth)-acrylate of the graft copolymer fraction of component (A) ±12 percentage units. Thus $W_1 + W_2 = W_3 \pm 12$. A more preferred range for miscibility is ±7 percentage units. Preferably except for the acid comonomers of component (D), the monomers of component (D) are identical to the monomers of the graft copolymer fraction of component (A).

A preferred component D is a terpolymer containing styrene, and from about 0.1 to about 3.0 mole percent maleic anhydride or $C_1$ to $C_4$ monoalkyl maleate or fumarate. With such a terpolymer complete miscibility with the graft copolymer fraction of the rubber graft component A is obtained when the graft copolymer also comprises acrylonitrile in a mole concentration within ±7 percentage units of the mole concentration of acrylonitrile and acid functional monomer of component D. Preferably the acid functional monomer is maleic anhydride present in a concentration of about 1 mole percent of the terpolymer. Another preferred component (D) is a terpolymer containing styrene, methyl methacrylate and maleic anhydride in the range of about 15 to 25 mole percent and more preferably about 22 mole percent.

Component (D) typically has a tensile modulus in the range of 350,000 to 450,000 psi (2,410 to 3,100 MPa).

In addition to the above components the polyblends of the invention can advantageously contain other additives such as plasticizers, antioxidants, stabilizers, flame-retardants, fibers, mineral fibers, fillers, dyes, and pigments.

The components of the polyblend can be blended together by any convenient process. Usually however they are extrusion blended.

The invention is now described with reference to the following examples which are for the purposes of illustration only and are not intended to imply any limitation on the scope of the invention. The components described below are blended in a number of different ratios and tested for various properties. Parts and percentages are by weight unless indicated otherwise.

ABS-1 - prepared by the graft emulsion polymerization of styrene and acrylonitrile in a weight ratio of 70:30 in the presence of polybutadiene-acrylonitrile (93:7) copolymer. ABS-1 contains 40 percent by weight of polybutadiene-acrylonitrile copolymer of which about 4 percent by weight is ungrafted. The weight average molecular weight of the free SAN in the styrene/acrylonitrile graft polymer is in the range from 75,000 to 150,000 as determined by gel permeation chromatography (GPC) using ASTM Method D 3536-76 modified in that four columns in series using micro Styragel™ (a trademark of Waters Assoc.) packing are used with a nominal exclusion limit of 5,000 nm, 10,000 nm, 100,000 nm and 1,000,000 nm. The detector is an ultraviolet light detector set at wavelength 254nm. The test samples are prepared at a concentration of 0.25 weight percent of polymer in tetrahydrofuran. The sample injection size is 0.2 ml and a flow rate of 2 ml/min. at ambient temperature is used.

The grafted polybutadiene has an average particle size in the range of from 0.1 to 0.25 micrometer measured as a weight average particle size diameter with centrifugal photosedimentometer (CPSM) by the published procedure of Graves, M. J. et al "Size Analysis of Subsieve Powders Using a Centrifugal Photosedimentometer", British Chemical Engineering 9:742-744 (1964). A Model 3000 Particle Size Analyzer from Martin Sweets Co., 3131 W. Market St., Louisville, KY is used. The tensile modulus of ABS-1 is about 220,000 psi (1,515.8 MPa).

ABS-2 is prepared by the graft emulsion polymerization of styrene and acrylonitrile in a weight ratio of 80:20 in the presence of polybutadiene-styrene (90:10) copolymer, and contains 35 percent by weight butadiene-styrene copolymer. The grafted copolymer has an average particle size in the range 0.06 to 0.15 micrometer as measured by CPSM as described above. The tensile modulus of ABS-2 is about 1,515.8 MPa.

ABS-3 is a 60:40 mixture of ABS-1 and a grafted composition which is the same as ABS-1 except that the average particle size is in the range of 0.06 to 0.15 micrometer as measured by CPSM. The tensile modulus of ABS-3 is about 1,515.8 MPa.

ABS-4 - the same as ABS-1 except that the ungrafted rubber is omitted, and only grafted polybutadiene is present. The tensile modulus of ABS-4 is about 1,515.8 MPa.

Nylon-1 - a random copolymer of 85 weight percent nylon 6,6 polymer (poly[hexa-methylene adipamide]) and 15 weight percent nylon 6 polymer (polycaprolactam).

Nylon-2 - a nylon 6,6 polymer.

Nylon-3 - a random copolymer of 76 weight percent nylon 6,6 polymer and 24 weight percent of nylon 6 polymer.

Nylon-4 - a nylon 6 polymer.

Nylon-5 - a heat stabilized nylon 6,9 polymer.

Terpolymer-1 - a terpolymer prepared by polymerizing a monomer mixture to provide a polymer containing a weight ratio of styrene to acrylonitrile of about 68:32 and a varied amount of maleic anhydride (MA). The weight average molecular weight is in the range from about 60,000 to 100,000 measured by GPC as described above. The tensile modulus of Terpolymer-1 is about 400,000 psi (2,756 MPa).

Terpolymer-2 - a terpolymer prepared by polymerizing a monomer mixture of styrene, maleic anhydride and methyl methacrylate to produce a composition in which the above monomers are in the weight ratio of 72:22:6 respectively (22 mole percent maleic anhydride). The tensile modulus of Terpolymer-2 is about 400,000 psi (2,756 MPa).

Copolymer-1 is a copolymer of styrene and maleic anhydride containing 8 weight percent of maleic anhydride, sold by Arco under the trademark Dylark 232.

Rubber-1 - a terpolymer of about 73 mole percent of ethylene, about 26 mole percent methyl methacrylate and about 1 mole percent of monoethyl maleate sold as Vamac™ G rubber (a trademark of DuPont).

Rubber-2 - a thermoplastic copolyetherester elastomer which is a block copolymer of short-chain diol terephthalate and long-chain polyether diol terephthalate available from DuPont Company, Elastomer Chemicals Department, Wilmington, DE 19898 as Hytrel™ 5556 (a trademark of DuPont). This material comprises about 60% by weight of hard segments of polybutylene terephthalate and about 40% by weight of soft segments of polytetramethylene ether terephthalate.

Rubber-3 - a zinc neutralized ethylene/acrylic acid copoloymer sold as Surlyn™ Ionomer 9950 (a trademark of DuPont).

Rubber-4 - a terpolymer of butyl acrylate/ethyl acrylate/hydroxy ethyl acrylate in a ratio of 79/20/1 weight percent sold as Hycar™ 4004 (a trademark of Goodrich).

Rubber-5 - an impact modified nylon comprising about 74 weight percent nylon 6,6, about 24 weight percent Rubber-4, and about 2 weight percent maleic anhydride/octadecene copolymer in a weight ratio of 50:50. The amount of rubber added to the blend is back-calculated and is shown as Rubber-5 in the table. The back-calculated nylon portion is added to the amount of Nylon-1 shown in the table.

Rubber-6 - an impact modified nylon comprising 80 weight percent nylon 6,6 and 20 weight percent maleated EPDM rubber. The amount of rubber added to the blend is back-calculated and is shown as Rubber-6 in the table. The back-calculated nylon portion is added to the amount of Nylon-1 shown in the table.

Rubber-7 - EPDM rubber.

Rubber-8 - Maleated EPDM rubber containing about 2 weight percent maleic anhydride functionality.

Rubber-9 - a terpolymer of ethylene/alkylacrylate/maleic anhydride sold as Lotader™ LX-4110 (a trademark of CdF Chemie).

Rubber-10 - a terpolymer of ethylene/alkyl acrylate/maleic anhydride sold as Lotader™ HX-8140 (a trademark of CdF Chemie).

Rubber-11 - a terpolymer of ethylene/alkyl acrylate/maleic anhydride sold as Lotader™ AX-8040 (a trademark of CdF Chemie).

Rubber-12 - a mixture of 100 parts Rubber-1 with 23 parts of fumed silica, stabilizers and processing aids sold as Vamac™ N-123 (a trademark of DuPont).

In each example and control example, one percent Ethanox™ 330 antioxidant, an alkylated phenol available from Ethyl Corporation, is added based on the total weight of the sample. All test specimens are "dry as molded", i.e. the polymers are dried to less than 0.25 weight percent water in the nylon phase and molded and tested.

Izod impact strength is measured according to ASTM D-256-56 with results given in joules/meter (J/m). Unless otherwise indicated the Izod is measured at room temperature on specimens of 0.64 cm width.

Flexural Modulus is measured according to ASTM D-790-66. The sample size is 0.635 cm x 1.27 cm with a span of 10.16 cm and a 1.27 cm per second cross-head rate. The results are given in megapascals (MPa).

Tensile Yield and Elongation at Fail are measured according to ASTM D-638 with results given in megapascals (MPa) and percent, respectively.

Blows to Fail are measured according to ASTM D-256-56 which has been modified such that the pendulum is dropped at an indicated energy insufficient to break the sample with one blow. The number of blows at that energy required to completely break the samples is the number of blows to fail.

The polymer blends of each example are physically blended by an extrusion process. This involves a preblending step of physically mixing the ABS, terpolymer, rubber and antioxidant and feeding the mixture into a Banbury intensive mixer, Model #69A4782. The rotors are run at about 100 revolutions per minute (RPM) with water cooling. When the stock temperature reaches 199°C, the batch is dumped. The material is sheeted on a two-roll mill, diced, and dried about 16 hours at 60°C and 98 Newtons/m².

The pelletized preblended material of each example is then physically mixed with the nylon and the mixture fed into the Killion extruder possessing a single stage mixing screw (3.8 cm in diameter by 68.6 cm long) which is rotated at about 100 RPM. The rear zone of the extruder is heated to 254°C with the middle and front zones heated to 260°C. The extruder is connected to a die with a single 0.318 cm diameter orifice through a 0.04 cm to 0.06 cm opening screen pack. The die is heated to 254°C. The extruded material is passed through a water bath and pelletized by a Kissam™ pelletizer. The rate of extrusion is 7.26 kgs per hour. The pelletized blended material is then injection molded into specimen bars for testing according to the procedures as set forth above with the testing results concurrently listed for each example in Tables 1 to 9. The injection molding is conducted using a 28.3 g Arburg 200 "S" Allrounder™ molding machine available from Arburg Machinenfabrik in Wurttemberg, Germany, possessing a general purpose screw with a check ring and a straight-through nozzle. The molding conditions are as follows:

1. **Temperatures:**
   - Rear Zone: 260°C
   - Center Zone: 260°C
   - Front Zone: 260°C
   - Nozzle: 260°C
   - Mold: 43°C

2. **Screw Speed:** 94 rpm

3. **Injection Rate:** 1.3 seconds

4. **Hold and Cooling Times:** 25-35 seconds

5. **Hydraulic Pressures:**
   - Injection: 5512 kPa
   - Hold: 4823 kPa
   - Back: 344 kPa

Example 1 and Controls 1 to 7, shown in Table 1, illustrate the effect of varying the rubber composition on the Izod impact value of the blend. The only blend with an unexpectedly high Izod of 1092 J/m is a blend comprising an acid containing acrylate copolymer (e.g. Example 1).

Examples 2 to 5, shown in Table 2, show the effectiveness of different acid-containing acrylic copolymer rubbers in the blend on Izod. All of the rubbers give polyblends possessing high Izod impact values.

Examples 6 to 10, shown in Table 3, show the effect of different nylon compositions in the blend on Izod, tensile yield and flexural modulus. A wide variety of nylon compositions are shown to be suitable for this blend.

Examples 11 to 13 and Controls 8 and 9, shown in Table 4, show the effect of varying the amount of functionalized rubber in the blend on the toughness of the blend, measured by number of blows to fail. An effective amount of rubber includes the range of 5 to 15 weight percent functionalized rubber in the blend.

Examples 14 to 19 and Controls 10 and 11, shown in Table 5, show the effect on Izod value of increasing the amount of functionalized rubber and decreasing the amount of ABS polymer to maintain a constant rubber level of 20 weight percent in the blend. A high level of impact strength is obtained when the functionalized rubber is in the range of 6 to 15 weight percent of the polyblend.

Examples 20 to 22 of Table 6 show that at constant nylon and compatibilizer content, a high level of impact strength is obtained over a broad concentration range of functionalized rubber.

Examples 23 to 26, shown in Table 7, show the effect of varying the ABS composition in the blend on Izod value of the blend. Control 12 (ABS-2) shows that when the acrylonitrile content of the graft copolymer fraction of the ABS polymer is less than about 25 weight percent, improved impact strength is not observed.

Examples 27 to 35 and Control 13, shown in Table 8, illustrate the effect of varying the amount of terpolymer in the blends on Izod value of the blends. A wide range of terpolymer amounts (0.5 to 10.0 weight percent) corresponding to 0.00006 to 0.0011 mole maleic anhydride per 100 parts by weight of polyblend is effective to enhance impact strength.

Examples 33 to 37 and Control 14, shown in Table 9, show the effect of the amount of maleic anhydride in the terpolymer on the Izod value of the blends. A wide range (0.18 to 4.5 mole percent maleic anhydride) corresponding to 0.00006 to 0.0017 mole maleic anhydride per 100 parts by weight of polyblend is shown to be effective in the blend to enhance impact strength.

Examples 38 to 42 and Controls 15 and 16, shown in Table 10, also show the effect of varying the amount of MA in the terpolymer and varying the amount of terpolymer in the blend. Terpolymers containing 22 mole percent MA are effective in low concentrations (less than 3.0 weight percent) in the blend providing concentrations of maleic anhydride in the range of 0.0002 to 0.003 mole per 100 parts by weight of polyblend (Examples 42-45). Similar results would be observed in blends containing a 50/50 weight percent copolymer of styrene/maleic anhydride.

Examples 46 to 49 and Controls 17 to 19 show that when the weight percent of polar monomer (acrylonitrile) and acid functional monomer (maleic anhydride) of component (D) is less than about 15, the impact strength of the polyblend is less responsive to improvement by addition of component (D).

EP 0 220 155 B1

## TABLE 1

### EFFECT OF VARYING RUBBER COMPOSITION

| | Ex 1 | Control 1 | Control 2 | Control 3 | Control 4 | Control 5 | Control 6 | Control 7 |
|---|---|---|---|---|---|---|---|---|
| ABS-1 | 30 | 30 | 30 | 35.5 | 35.5 | 35.5 | 30 | 30 |
| Terpolymer-1 (0.9 mole percent MA) | 6 | 6 | 6 | 6 | 6 | 6 | 6 | 6 |
| Nylon-1 | 56 | 56 | 56 | 52.5 | 52.5 | 52.5 | 56 | 56 |
| Rubber-1 | 8 | | | | | | | |
| -2 | | 8 | | | | | | |
| -3 | | | 8 | | | | | |
| -4 | | | | 6 | | | | |
| -5 | | | | | 6 | | | |
| -6 | | | | | | 6 | | |
| -7 | | | | | | | 8 | |
| -8 | | | | | | | | 8 |
| Izod | 1092 | 112 | 84.1 | 167 | 565 | 632 | 152 | 125 |
| Total Rubber | 20 | 20 | 20 | 20 | 20 | 20 | 20 | 20 |

EP 0 220 155 B1

TABLE 2

EFFECT OF DIFFERENT ACID-CONTAINING ACRYLIC COPOLYMER RUBBERS

| | Ex 2 | Ex 3 | Ex 4 | Ex 5 |
|---|---|---|---|---|
| ABS-1 | 30 | 30 | 30 | 30 |
| Terpolymer-1 (0.9 mole percent MA) | 3 | 3 | 3 | 3 |
| Nylon-1 | 59 | 59 | 59 | 59 |
| Rubber-1 | 8 | | | |
| -9 | | 8 | | |
| -10 | | | 8 | |
| -11 | | | | 8 |
| Izod, 1.27 x 0.64 cm at | | | | |
| Room Temp. | 1106 | 879 | 879 | 879 |
| 10°C | 1068 | 613 | 281 | 705 |
| 0°C | 949 | 291 | 485 | 312 |
| -10°C | 357 | 217 | 257 | 303 |

## TABLE 3

### EFFECT OF DIFFERENT NYLON COMPOSITIONS

|  | Ex 6 | Ex 7 | Ex 8 | Ex 9 | Ex 10 |
|---|---|---|---|---|---|
| ABS-1 | 30 | 30 | 30 | 30 | 30 |
| Terpolymer-1 (0.9 mole percent MA) | 6 | 6 | 6 | 6 | 6 |
| Nylon-1 | 56 | | | | |
| Nylon-2 | | 56 | | | |
| Nylon-3 | | | 56 | | |
| Nylon-4 | | | | 56 | |
| Nylon-5 | | | | | 56 |
| Rubber-2 | 8 | 8 | 8 | 8 | 8 |
| Total Rubber | 20 | 20 | 20 | 20 | 20 |
| Izod | 954 | 830 | 944 | 738 | 797 |
| Tensile Yield | 43.1 | 44.6 | 41.4 | 40.9 | 37.6 |
| Flex Modulus | 1805 | 2115 | 1640 | 1957 | 1461 |

EP 0 220 155 B1

TABLE 4

EFFECT OF VARYING AMOUNT OF FUNCTIONALIZED RUBBER ON TOUGHNESS

|  | Control 8 | Ex 11 | Ex 12 | Ex 13 | Control 9 |
|---|---|---|---|---|---|
| ABS-1 | 52 | 38 | 30 | 13 | 0 |
| Terpolymer-1 (0.9 mole percent MA) | 6 | 6 | 6 | 6 | 6 |
| Nylon-1 | 42 | 51 | 56 | 66 | 74 |
| Rubber-1 | 0 | 5 | 8 | 15 | 20 |
| Total Rubber | 20.8 | 20 | 20 | 20 | 20 |
| No. of Blows to Fail |  |  |  |  |  |
| at 1.59 J/cm | 11 | 17 | 17 | 18 | 10 |
| at 2.12 J/cm | 7 | 10 | 10 | 11 | 5 |
| Izod at 23°C | 571 | 925 | 1017 | 1148 | 625 |

EP 0 220 155 B1

## TABLE 5

### EFFECT OF VARYING AMOUNT OF FUNCTIONALIZED RUBBER

|  | Control 10 | Ex 14 | Ex 15 | Ex 16 | Ex 17 | Ex 18 | Ex 19 | Control 11 |
|---|---|---|---|---|---|---|---|---|
| ABS-1 | 50 | 40 | 37 | 35 | 30 | 25 | 12 | 0 |
| Terpolymer-1 (0.9 mole percent MA) | 6 | 6 | 6 | 6 | 6 | 6 | 6 | 6 |
| Nylon-1 | 44 | 50 | 52 | 53 | 56 | 59 | 67 | 74 |
| Rubber-1 | 0 | 4 | 5 | 6 | 8 | 10 | 15 | 20 |
| Total Rubber | 20 | 20 | 20 | 20 | 20 | 20 | 20 | 20 |
| Izod at 23°C | 480 | 516 | 566 | 882 | 944 | 947 | 953 | 578 |
| at 40°C | 880 | -- | 977 | -- | -- | -- | -- | 977 |
| Tensile Yield | -- | 42.8 | 42.5 | 42.8 | 43.4 | 42.5 | 41.6 | 45.7 |
| % Elongation @ Fail | -- | 261 | 263 | 291 | 288 | 273 | 358 | 264 |

EP 0 220 155 B1

## TABLE 6

### EFFECT OF VARYING AMOUNT OF FUNCTIONALIZED RUBBER

|  | Control 10 | Ex 16 | Ex 20 | Ex 21 | Ex 22 |
|---|---|---|---|---|---|
| ABS-1 | 50 | 35 | 33 | 28 | 23 |
| Terpolymer-1 (0.9 mole percent MA) | 6 | 6 | 6 | 6 | 6 |
| Nylon-1 | 44 | 53 | 56 | 56 | 56 |
| Rubber-1 | 0 | 6 | 5 | 10 | 15 |
| Total Rubber | 20 | 20 | 18.2 | 21.2 | 26.2 |
| Izod at 23°C | 480 | 882 | 926 | 1060 | 1120 |

TABLE 7

EFFECT OF DIFFERENT ABS COMPOSITIONS

|  | Ex 23 | Ex 24 | Control 12 | Ex 25 | Ex 26 |
|---|---|---|---|---|---|
| ABS-1 | 50 | 50 | | | |
| ABS-2 | | | 35 | | |
| ABS-3 | | | | 31 | |
| ABS-4 | | | | | 33 |
| Terpolymer-1 (0.9 mole percent MA) | 6 | 6 | 3 | 3 | 3 |
| Nylon-1 | 36 | 40 | 54 | 58 | 56 |
| Rubber-1 | 8 | 4 | 8 | 8 | 8 |
| Total Rubber | 28 | 24 | 20 | 20 | 20 |
| Izod Impact | 911 | 905 | 287 | 1076 | 1028 |

## TABLE 8

### EFFECT OF VARYING AMOUNT OF TERPOLYMER IN BLENDS

| | Control 13 | Ex 27 | Ex 28 | Ex 29 | Ex 30 | Ex 31 | Ex 32 | Ex 33 | Ex 34 | Ex 35 |
|---|---|---|---|---|---|---|---|---|---|---|
| ABS-1 | 30 | 30 | 30 | 30 | 30 | 30 | 30 | 30 | 30 | 30 |
| Terpolymer-1 (0.9 mole percent MA) | 0 | 0.5 | 1.0 | 1.5 | 2.0 | 3.0 | 5.0 | 6.0 | 8.0 | 10.0 |
| Nylon-1 | 62 | 61.5 | 61 | 60.5 | 60 | 59 | 57 | 56 | 54 | 52 |
| Rubber-1 | 8 | 8 | 8 | 8 | 8 | 8 | 8 | 8 | 8 | 8 |
| Total Rubber | 20 | 20 | 20 | 20 | 20 | 20 | 20 | 20 | 20 | 20 |
| Izod Impact | 234 | 683 | 922 | 944 | 960 | 944 | 927 | 900 | 841 | 732 |

## TABLE 9

### EFFECT OF VARYING AMOUNT OF MALEIC ANHYDRIDE IN TERPOLYMER

|  | Control 14 | Ex 36 | Ex 37 | Ex 38 | Ex 39 | Ex 40 |
|---|---|---|---|---|---|---|
| ABS-1 | 30 | 30 | 30.4 | 30 | 30 | 30 |
| Nylon-1 | 59 | 59 | 58.4 | 59 | 58.9 | 59 |
| Rubber-1 | 8 | 8 | 8.2 | 8 | 8.1 | 8 |
| Terpolymer-1 | 3 | 3 | 3.0 | 3.0 | 3.0 | 3 |
| Mole percent MA in Terpolymer | 0 | 0.18 | 0.45 | 0.9 | 1.35 | 4.5 |
| Izod | 242 | 884 | 1051 | 960 | 1094 | 686 |

EP 0 220 155 B1

EP 0 220 155 B1

## TABLE 10

### EFFECT OF VARYING AMOUNT OF MALEIC ANHYDRIDE IN TERPOLYMER

|  | Ex 41 | Control 15 | Ex 42 | Ex 43 | Ex 44 | Ex 45 | Control 16 |
|---|---|---|---|---|---|---|---|
| ABS-1 | 30 | 30 | 30 | 30 | 30 | 30 | 30 |
| Terpolymer-1 | 3 | -- | -- | -- | -- | -- | -- |
| Terpolymer-2 | -- | 3 | 1 | 0.5 | 0.2 | 0.1 | 0 |
| Mole percent MA in Terpolymer | 0.9 | 22 | 22 | 22 | 22 | .22 | 0 |
| Nylon-1 | 59 | 59 | 61 | 61.5 | 61.8 | 61.9 | 62 |
| Rubber-1 | 8 | 8 | 8 | 8 | 8 | 8 | 8 |
| Total Rubber | 20 | 20 | 20 | 20 | 20 | 20 | 20 |
| Izod Impact | 1163 | 160 | 324 | 681 | 1123 | 1064 | 235 |

## TABLE 11

### EFFECT OF VARYING THE ACRYLONITRILE-MALEIC ANHYDRIDE CONTENT

### OF COMPONENT (D)

| Example | Component (D) Comoposition | | | Component D Concentration in Polyblend wt. % | Maleic Anhydride Content of Poly-blend, mole per 100 parts by weight | Polyblend Izod J/m notch |
|---|---|---|---|---|---|---|
| | AN, wt.% | MA, wt.% | MA+AN, wt.% | | | |
| 46 | 35.6 | 1.0 | 36.6 | 3 | .0003 | 1090 |
| 47 | 32.6 | 1.0 | 33.6 | 3 | .0003 | 1050 |
| 48 | 21.0 | 1.0 | 30.1 | 3 | .0003 | 1070 |
| 49 | 16.9 | 1.0 | 17.9 | 3 | .0003 | 1060 |
| Control 17 | 0 | 8.0 | 8.0 | 0.1 | .00008 | 146 |
| 18 | 0 | 8.0 | 8.0 | 0.2 | .00016 | 130 |
| 19 | 0 | 8.0 | 8.0 | 0.3 | .00024 | 146 |
| 20 | 0 | 8.0 | 8.0 | 0.6 | .00048 | 630 |
| 21 | 0 | 8.0 | 8.0 | 1.0 | .0008 | 277 |

## Claims

1. A polymer blend comprising:

(A) A graft rubber composition comprising from 5 to 80 weight percent of a substrate rubber having a glass transition temperature below 0°C and from 95 to 20 weight percent of monomers comprising, per 100 parts by weight of the monomers, from 20 to 75 parts by weight of a vinyl aromatic monomer and from 80 to 25 parts by weight of a monomer selected from $C_1$ to $C_4$ alkyl (meth)acrylate and (meth)acrylonitrile, said monomers having been polymerized in the presence of and grafted on to the substrate rubber;

(B) a polyamide;

19

(C) an acid-containing acrylate copolymer rubber having a glass transition temperature below 0°C; and

(D) an acid-containing polymer which is miscible with component (A), has a glass transition temperature above 0°C and contains from 0.05 to 50 mole percent of acid functional comonomer units;

wherein the weight ratio of component (A) to component (B) is in the range of 1:9 to 9:1, wherein the sum of components (A) and (B) is at least 60 weight percent of the polymer blend, wherein the amount of component (C) is in the range of 1 to 18 weight percent of the polymer blend, and wherein the amount of component (D) is in the said range of 0.006 to 39 weight percent of the polymer blend so as to provide 0.00003 to 0.005 moles of said acid functional comonomer units per 100 parts by weight of the polymer blend, thereby improving the impact resistance of the polymer blend comprising components (A), (B) and (C).

2. A polymer blend of Claim 1, wherein the substrate rubber is polybutadiene or a butadiene copolymer and the monomers grafted thereto are styrene and (meth)acrylonitrile or methyl acrylate.

3. A polymer blend of either of Claim 1 or Claim 2, wherein the graft monomers of component (A) comprise 25 to 50 parts by weight of acrylonitrile and 50 to 75 parts by weight of a vinyl monomer per 100 parts by weight of the monomers.

4. A polymer blend of any of the preceding claims, wherein component (B) is selected from nylon 6, nylon 6,6, nylon 6,9 and a copolymer of nylon 6,6 and nylon 6.

5. A polymer blend of any of the preceding claims, wherein the component (D) polymer consists of units of a vinyl aromatic monomer, a polar monomer selected from $C_1$ to $C_4$ alkyl (meth)acrylate and (meth)acrylonitrile and from 0.05 to 50 mole per cent of acid functional monomer selected from (meth) acrylic acid, a dicarboxylic acid or anhydride or a $C_1$ to $C_{12}$ monoalkyl ester of a dicarboxylic acid.

6. A polymer blend of any of the preceding claims, wherein the blend contains 0.01 to 20 weight percent of component (D) and component (D) contains 0.1 to 30.0 mole percent of the acid functional comonomer units.

7. A polymer blend of Claim 6, wherein the total weight percent of acid comonomer and polar monomer units of component (D) is equal to the total weight percent of polar monomer units of the graft copolymer fraction of component (A) ± 12 percentage units, and wherein the total weight percent of acid comonomer and polar monomer units of component (D) is at least 15 weight percent of component (D).

8. A polymer blend of Claim 7, wherein the total weight percent of acid comonomer and polar monomer units of component (D) is equal to the weight percent of polar monomer units of component (A) ± 7 percentage units.

9. A polymer blend of either Claim 7 or Claim 8, wherein except for the acid comonomer units of component (D), the monomer units of component (D) are identical to the monomer units of the graft copolymer fraction of component (A).

10. A polymer blend of any of Claims 7 to 9, wherein component (D) is a copolymer of a vinyl aromatic monomer, a monomer selected from (meth)acrylonitrile and $C_1$ to $C_4$ alkyl (meth)acrylates and an acid functional monomer selected from (meth)acrylic acid, $C_1$ to $C_{12}$ monoalkyl esters of maleic acid and fumaric acid, maleic acid, fumaric acid, itaconic acid, aconitic acid, citraconic acid, maleic anhydride, itaconic anhydride, aconitic anhydride, and citraconic anhydride.

11. A polymer blend of Claim 7, wherein component (D) is a terpolymer of styrene, acrylonitrile and maleic anhydride and the maleic anhydride comprises 0.1 to 3.0 mole percent of the terpolymer.

12. A polymer blend of Claim 11, wherein the maleic anhydride comprises about 1 mole percent of the terpolymer.

EP 0 220 155 B1

13. A polymer blend of any of Claims 7 to 9, wherein component (D) is a terpolymer of styrene, methyl methacrylate and maleic anhydride and the maleic anhydride comprises from 15 to 25 mole percent of the terpolymer

14. A polymer blend of Claim 13, wherein the maleic anhydride comprises about 22 mole percent of the terpolymer.

15. A polymer of any of the preceding claims, wherein component (C) comprises a copolymer of an alpha-olefin, a $C_1$ to $C_4$ acrylate and an acid-containing monomer.

16. A polymer blend of any of Claims 7 to 14, wherein component (C) comprises a copolymer of ethylene, a $C_1$ to $C_4$ alkyl acrylate, and an acid-containing comonomer selected from acrylic acid, methacrylic acid, maleic acid, fumaric acid, itaconic acid, aconitic acid, citraconic acid, maleic anhydride, itaconic anhydride, aconitic anhydride, citraconic anhydride and $C_1$ to $C_{12}$ monoalkyl esters of maleic acid and fumaric acid.

17. A polymer blend of any of Claims 7 to 14, wherein component (C) is a copolymer comprising at least 50 mole percent ethylene, 0.5 to 10 mole percent acrylic acid or monoethyl maleate and 10 to 49.5 mole percent $C_1$ to $C_{14}$ alkyl acrylate.

18. A polymer blend of Claim 17, wherein component (C) provides from 5 to 15 weight percent of the polyblend.

19. A polymer blend according to Claim 1, wherein component (A) comprises 5 to 60 weight percent of substrate rubber and 95 to 40 weight percent of graft monomers, said graft monomers comprising methyl (meth)acrylate or (meth)acrylonitrile.

20. Shaped articles prepared from a polymer blend according to any of the preceding claims.

## Revendications

1. Mélange de polymères comprenant :
   (A) une composition de caoutchouc greffé comprenant de 5 à 80 pour-cent en poids d'un substrat caoutchouc ayant une température de transition vitreuse inférieure à 0°C et de 95 à 20 pour-cent en poids de monomères comprenant pour 100 parties en poids des monomères, de 20 à 75 pour-cent en poids d'un monomère vinyle aromatique et de 80 à 25 parties en poids d'un monomère choisi parmi le (méth)-acrylate d'alkyle $C_1$ à $C_4$ et le (méth)-acrylonitrile, lesdits monomères étant polymérisés en présence du substrat caoutchouc sur lequel ils sont greffés;
   (B) un polyamide;
   (C) un caoutchouc copolymère acrylate contenant un acide, ayant une température de transition vitreuse inférieure à 0°C; et
   (D) un polymère contenant un acide miscible avec le composant (A), ayant une température de transition vitreuse supérieure à 0°C et contenant entre 0,05 et 50 pour-cent en moles d'unités de comonomère à fonction acide;
   où le rapport en poids du composant (A) sur le composant (B) est dans la gamme de 1:9 à 9:1, où la somme des composants (A) et (B) est égale à au moins 60 pour-cent en poids du mélange de polymères, où la quantité de composant (C) est dans la gamme de 1 à 18 pour-cent en poids du mélange de polymères et où la quantité de composant (D) est dans la gamme de 0,006 à 39 pour-cent en poids du mélange de polymères de manière à fournir 0,00003 à 0,005 moles desdites unités de comonomère à fonction acide pour 100 parties en poids du mélange de polymères, améliorant ainsi la résistance aux chocs du mélange de polymères comprenant les composants (A), B) et (C).

2. Mélange de polymères selon la revendication 1, où le substrat caoutchouc est le polybutadiène ou un copolymère de butadiène et les monomères greffés sur celui-ci sont le styrène et le (méth)-acrylonitrile ou l'acrylate de méthyle.

3. Mélange de polymères selon soit la revendication 1, soit la revendication 2, où les monomères greffés du composant (A) comprennent de 25 à 50 parties en poids d'acrylonitrile et de 50 à 75 parties en

21

poids d'un monomère vinylique pour 100 parties en poids des monomères.

4. Mélange de polymères selon l'une quelconque des revendications précédentes, où le composant (B) est choisi parmi le nylon 6, le nylon 6,6, le nylon 6,9 et un copolymère du nylon 6,6 et du nylon 6.

5. Mélange de polymères selon l'une quelconque des revendications précédentes, où le composant polymérique (D) est constitué d'unités d'un monomère vinyle aromatique, d'un monomère polaire choisi parmi le (méth)-acrylate d'alkyle $C_1$ à $C_4$ et le (méth)-acrylonitrile et de 0,05 à 50 moles pour cent de monomère à fonction acide choisi parmi l'acide (méth)-acrylique, un anhydride ou un acide dicarboxylique ou un ester monoalkyle $C_1$ à $C_{12}$ d'un acide dicarboxylique.

6. Mélange de polymères selon l'une quelconque des revendications précédentes, où le mélange contient de 0,01 à 20 pour-cent en poids du composant (D) et où le composant (D) contient de 0,1 à 30,0 pour-cent en moles d'unités de comonomère à fonction acide.

7. Mélange de polymères selon la revendication 6, où le pourcentage total en poids des unités de comonomère acide et de monomère polaire du composant (D) est égal au pourcentage total en poids des unités de monomère polaire de la fraction de copolymère greffé du composant (A) ± 12 unités de pourcentage, et où le pourcentage total en poids des unités de comonomère acide et de monomère polaire du composant (D) est égal au moins à 15 pour-cent en poids du composant (D).

8. Mélange de polymères selon la revendication 7, où le pourcentage total en poids des unités de comonomère acide et de monomère polaire du composant (D) est égal au pourcentage en poids des unités de monomère polaire du composant (A) ± 7 unités de pourcentage.

9. Mélange de polymères selon soit la revendication 7, soit la revendication 8, où exception faite des unités de comonomère acide du composant (D), les unités de monomère du composant (D) sont identiques aux unités de monomère de la fraction de copolymère greffé du composant (A).

10. Mélange de polymères selon l'une quelconque des revendications 7 à 9, où le composant (D) est un copolymère d'un monomère vinyle aromatique, d'un monomère choisi parmi le (méth)-acrylonitrile et les (méth)-acrylates d'alkyle $C_1$ à $C_4$ et d'un monomère à fonction acide choisi parmi l'acide (méth)-acrylique, les esters monoalkyle $C_1$ à $C_{12}$ de l'acide maléique et de l'acide fumarique, l'acide maléique, l'acide fumarique, l'acide itaconique, l'acide aconitique, l'acide citraconique, l'anhydride maléique, l'anhydride itaconique, l'anhydride aconitique et l'anhydride citraconique.

11. Mélange de polymères selon la revendication 7, où le composant (D) est un terpolymère du styrène, de l'acrylonitrile et de l'anhydride maléique et où l'anhydride maléique constitue de 0,1 à 3,0 pour-cent en moles du terpolymère.

12. Mélange de polymères selon la revendication 11, où l'anhydride maléique constitue environ 1 pour-cent en moles du terpolymère.

13. Mélange de polymères selon l'une quelconque des revendications 7 à 9, où le composant (D) est un terpolymère du styrène, du méthacrylate de méthyle et de l'anhydride maléique et où l'anhydride maléique constitue de 15 à 25 pour-cent en moles du terpolymère.

14. Mélange de polymères selon la revendication 13, où l'anhydride maléique constitue environ 22 pour-cent en moles du terpolymère.

15. Polymère selon l'une quelconque des revendications précédentes, où le composant (C) comprend un copolymère d'une alpha-oléfine, d'un acrylate $C_1$ à $C_4$ et d'un monomère contenant un acide.

16. Mélange de polymères selon l'une quelconque des revendications 7 à 14, où le composant (C) comprend un copolymère de l'éthylène, un acrylate d'alkyle $C_1$ à $C_4$ et un comonomère contenant un acide choisi parmi l'acide acrylique, l'acide méthacrylique, l'acide maléique, l'acide fumarique, l'acide itaconique, l'acide aconitique, l'acide citraconique, l'anhydride maléique, l'anhydride itaconique, l'anhydride aconitique, l'anhydride citraconique et les esters monoalkyle $C_1$ à $C_{12}$ de l'acide maléique et de

22

l'acide fumarique.

17. Mélange de polymères selon l'une quelconque des revendications 7 à 14, où le composant (C) est un copolymère comprenant au moins 50 pour-cent en moles d'éthylène, 0,5 à 10 pour-cent en moles d'acide acrylique ou de maléate de monoéthyle et de 10 à 49,5 pour-cent en moles d'acrylate d'alkyle $C_1$ à $C_{14}$.

18. Mélange de polymères selon la revendication 17, où le composant (C) ccnstitue de 5 à 15 pour-cent en poids du polyblend.

19. Mélange de polymères selon la revendication 1, où le composant (A) comprend de 5 à 60 pour-cent en poids de substrat caoutchouc et de 95 à 40 pour-cent en poids de monomères greffés, lesdits monomères greffés comprenant le (méth)-acrylate de méthyle ou le (méth)-acrylonitrile.

20. Particules formées préparées à partir d'un mélange de polymères selon l'une quelconque des revendications précédentes.

**Patentansprüche**

1. Polymermischung, enthaltend:
(A) eine Pfropf-Kautschukmasse umfassend 5 bis 80 Gew.-% eines Substratkautschuks mit einer Glasübergangstemperatur unterhalb 0°C und 95 bis 20 Gew.-% Monomere, welche pro 100 Gew.-Teile der Monomere 20 bis 75 Gew.-Teile eines vinylaromatischen Monomers und 80 bis 25 Gew.-Teile eines Monomers ausgewählt aus $C_1$-$C_4$-Alkyl-(meth)acrylat und (Meth)acrylnitril umfassen, welche Monomere in Gegenwart des Substratkautschuks polymerisiert und auf diesen aufgepfropft worden sind;
(B) ein Polyamid;
(C) einen säurehaltigen Acrylat-Copolymerkautschuk mit einer Glasübergangstemperatur unterhalb 0°C; und
(D) ein säurehaltiges Polymer, welches mit dem Bestandteil (A) mischbar ist, eine Glasübergangstemperatur oberhalb 0°C aufweist und 0,05 bis 50 Mol-% säurefunktioneller Comonomer-Einheiten enthält;
wobei das Gewichtsverhältnis von Bestandteil (A) zu Bestandteil (B) im Bereich von 1:9 bis 9:1 liegt, die Summe der Bestandteile (A) und (B) mindestens 60 Gew.-% der Polymermischung ausmacht, die Menge des Bestandteils (C) im Bereich von 1 bis 18 Gew.-% der Polymermischung liegt und die Menge des Bestandteils (D) derart im Bereich von 0,006 bis 39 Gew.-% der Polymermischung liegt, daß sich 0,00003 bis 0,005 Mol der säurefunktionellen Comonomer-Einheiten pro 100 Gew.-Teile der Polymermischung ergeben, wodurch die Schlagzähigkeit der die Bestandteile (A), (B) und (C) enthaltenden Polymermischung verbessert wird.

2. Polymermischung nach Anspruch 1, worin der Substratkautschuk Polybutadien oder ein Butadien-Copolymer ist und die darauf aufgepfropften Monomeren Styrol und (Meth)acrylnitril oder Methylacrylat sind.

3. Polymermischung nach Anspruch 1 oder Anspruch 2, worin die Pfropf-Monomeren des Bestandteils (A) 25 bis 50 Gew.-Teile Acrylnitril und 50 bis 75 Gew.-Teile eines Vinylmonomers pro 100 Gew.-Teile der Monomeren umfassen.

4. Polymermischung nach einem dervorhergehenden Ansprüche, worin der Bestandteil (B) aus Nylon-6, Nylon-6,6, Nylon-6,9 und einem Copolymer aus Nylon-6,6 und Nylon-6 ausgewählt ist.

5. Polymermischung nach einem der vorhergehenden Ansprüche, worin das Polymer des Bestandteils (D) aus Einheiten eines vinylaromatischen Monomers, eines aus $C_1$-$C_4$-Alkyl-(meth)acrylat und (Meth)-acrylnitril ausgewählten polaren Monomers und 0,05 bis 50 Mol-% des aus (Meth)acrylsäure, einer Dicarbonsäure oder einem Dicarbonsäureanhydrid oder einem $C_1$-$C_{12}$-Monoalkylester einer Dicarbonsäure ausgewählten säurefunktionellen Monomers besteht.

6. Polymermischung nach einem der vorhergehenden Ansprüche, worin die Mischung 0,01 bis 20 Gew.-%

des Bestandteils (D) enthält und der Bestandteil (D) 0,1 bis 30,0 Mol-% der säurefunktionellen Comonomer-Einheiten enthält.

7. Polymermischung nach Anspruch 6, worin die Gesamtmenge in Gewichtsprozent der Säure-Comonomer-Einheiten und der polaren Monomer-Einheiten des Bestandtells (D) gleich ist der Gesamtmenge In Gewichtsprozent der polaren Monomer-Einheiten des Pfropfcopolymer-Anteils des Bestandteils (A) ± 12 Prozenteinheiten und worin die Gesamtmenge in Gewichtsprozent der Säure-Comonomer-Einheiten und der polaren Monomer-Einheiten des Bestandteils (D) mindestens 15 Gew.-% des Bestandteils (D) ausmacht.

8. Polymermischung nach Anspruch 7, worin die Gesamtmenge in Gewichtsprozent der Säure-Comonomer-Einheiten und der polaren Monomer-Einheiten des Bestandteils (D) gleich ist dem Gewichtsprozentsatz der polaren Monomer-Einheiten des Bestandteils (A) ± 7 Prozenteinheiten.

9. Polymermischung nach Anspruch 7 oder Anspruch 8, worin mit Ausnahme der Säure-Comonomer-Einheiten des Bestandteils (D) die Monomer-Einheiten des Bestandteils (D) identisch sind mit den Monomer-Einheiten des Pfropf-Copolymeranteils des Bestandteils (A).

10. Polymermischung nach einem der Ansprüche 7 bis 9, worin der Bestandteil (D) ein Copolymer eines vinylaromatischen Monomers, eines aus (Meth)acrylnitril und $C_1$-$C_4$-Alkyl-(meth)-acrylaten ausgewählten Monomers und eines aus (Meth)acrylsäure, $C_1$-$C_{12}$-Monoalkylestern von Maleinsäure und Fumarsäure, Maleinsäure, Fumarsäure, Itaconsäure, Aconitsäure, Citraconsäure, Maleinsäureanhydrid, Itaconsäureanhydrid, Aconitsäureanhydrid und Citraconsäureanhydrid ausgewählten säurefunktionellen Monomers ist.

11. Polymermischung nach Anspruch 7, worin der Bestandteil (D) ein Terpolymer aus Styrol, Acrylnitril und Maleinsäureanhydrid ist, wobei das Maleinsäureanhydrid 0,1 bis 3,0 Mol-% des Terpolymers ausmacht.

12. Polymermischung nach Anspruch 11, worin das Maleinsäureanhydrid etwa 1 Mol-% des Terpolymers ausmacht.

13. Polymermischung nach einem der Ansprüche 7 bis 9, worin der Bestandteil (D) ein Terpolymer aus Styrol, Methylmethacrylat und Maleinsäureanhydrid ist, wobei das Maleinsäureanhydrid 15 bis 25 Mol-% des Terpolymers ausmacht.

14. Polymermischung nach Anspruch 13, worin das Maleinsäureanhydrid etwa 22 Mol-% des Terpolymers ausmacht.

15. Polymermischung nach einem der vorhergehenden Ansprüche, worin der Bestandteil (C) ein Copolymer aus einem α-Olefin, einem $C_1$-$C_4$-Alkylacrylat und einem säurehaltigen Monomer umfaßt.

16. Polymermischung nach einem der Ansprüche 7 bis 14, worin der Bestandteil (C) ein Copolymer aus Ethylen, einem $C_1$-$C_4$-Alkylacrylat und einem säurehaltigen Comonomer, ausgewählt aus Acrylsäure, Methacrylsäure, Maleinsäure, Fumarsäure, Itaconsäure, Aconitsäure, Citraconsäure, Maleinsäureanhydrid, Itaconsäureanhydrid, Aconitsäureanhydrid, Citraconsäureanhydrid und $C_1$-$C_{12}$-Monoalkylestern von Maleinsäure und Fumarsäure, umfaßt.

17. Polymermischung nach einem der Ansprüche 7 bis 14, worin der Bestandteil (C) ein Copolymer ist, welches mindestens 50 Mol-% Ethylen, 0,5 bis 10 Mol-% Acrylsäure oder Monoethylmaleat und 10 bis 49,5 Mol-% $C_1$-$C_{14}$-Alkylacrylat umfaßt.

18. Polymermischung nach Anspruch 17, worin der Bestandteil (C) 5 bis 15 Gew.-% der Polymermischung ausmacht.

19. Polymermischung nach Anspruch 1, worin der Bestandteil (A) 5 bis 60 Gew.-% des Substratkautschuks und 95 bis 40 Gew.-% Pfropfmonomere aufweist, welche Pfropfmonomere Methyl(meth)acrylat oder (Meth)acrylnitril umfassen.

20. Formgegenstände hergestellt aus einer Polymermischung nach einem der vorhergehenden Ansprüche.